# EUROPEAN PATENT APPLICATION

(11) **EP 1 011 247 A1**
(43) Date of publication of application: **21.06.2000**
(21) Application number: 98310240.1
(22) Date of filing: 14.12.1998
(51) Int. Cl.: H04M 1/57

(54) **Telephone set capable of speaking telephone number of calling party**

(71) Applicant: WINBOND ELECTRONICS CORPORATION, Hsinchu (TW)
(72) Inventor: Wu, Jui-Kuang, 22 Kin Ko-Yuan Li, East District Hsinchu (TW); Hwang Bar-Chung, Chung-Lu Li, Taoyuan (TW)
(74) Representative: Beresford, Keith Denis Lewis

(57) **Abstract**

A telephone set that is capable of speaking the telephone number of the caller while the telephone rings is provided. A user can also remotely retrieve incoming telephone numbers stored in the telephone set memory through another telephone. In this telephone set, a caller ID (CID) receiver is used to receive signals inputted through the telephone line and determine the telephone number of the calling party according to the signals being received. A speech IC is used to speak out the telephone number of the calling party while ringing. A DTMF decoder is used to analyze the DTMF signals, which represent a number inputted by the remote user over the telephone line. If the input number is determined to be the password preset by the user, then all of the incoming telephone numbers recorded in the telephone set memory are played back by means of the speech IC.

## Description

### BACKGROUND OF THE INVENTION

### Field of the invention

The present invention relates to a telephone, and particularly to a telephone that is capable of speaking the telephone number of a caller who is calling or has called in.

### Description of prior art

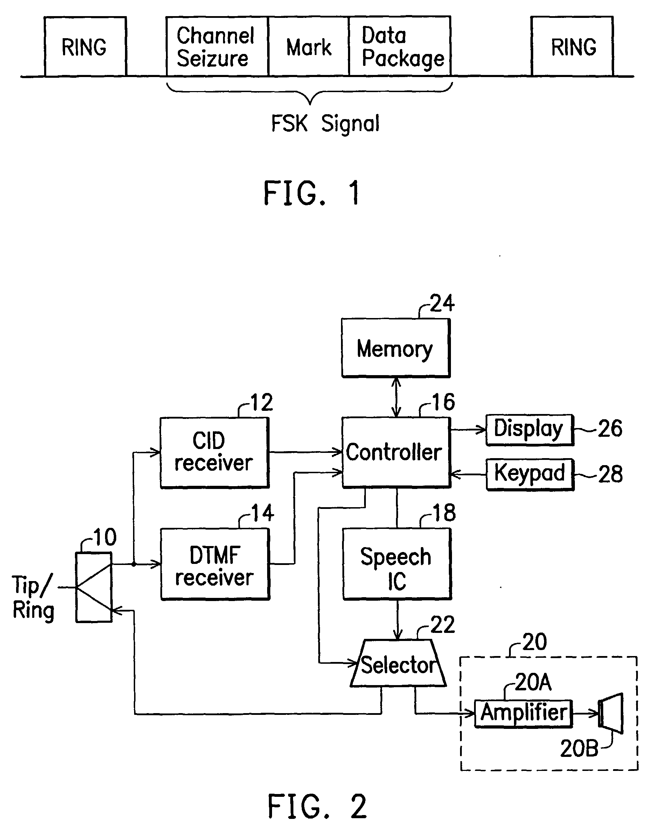

Nowadays, most telecommunications devices provide caller identification in. The caller can be identified by providing a caller identification code immediately after the first ring signal from the calling party. The caller identification code is modulated by frequency-shift keying modulation (FSK). Referring to Fig. 1, the FSK signal (i.e., the caller identification code) is received after receiving the first ring signal by a telephone capable of recognizing the caller identification code (hereinafter referred to as a CID telephone). The CID telephone can recognize the telephone number of the calling party even in an ON-HOOK state by activating the FSK signal receiver when receiving the first ring signal. The FSK signal includes a channel-seizure signal, mark signal and data package.

A CID telephone can recognize and record the telephone number of the calling party, and then the incoming telephone number is filtered by comparison with a telephone number list set by the user to decide whether the telephone rings. Furthermore, a LCD provided on the CID telephone can display the telephone number being recorded. However, a user can not obtain information about incoming telephone numbers when he is at a remote location. To solve the problem, an answering machine is another choice for the user. But the user is still unable to know who the caller was if the caller did not leave any message on the answering machine.

### SUMMARY OF THE INVENTION

Therefore, to improve the drawbacks of a conventional CID telephone, the object of this invention is to provide a telephone that is capable of speaking the telephone number of the caller while the telephone rings. Further, a remote user can retrieve all the incoming telephone numbers recorded in the telephone set memory through another telephone.

According to this invention, a telephone set capable of speaking a telephone number of a calling party comprises: a caller ID receiver, a controller, and a vocal device.

The caller ID receiver receives signals from a telephone line and determines the telephone number of the calling party according to the signals being received.

The controller receives the telephone number output from the caller ID receiver and accordingly generates a control signal.

The control signal generated by the controller is then transmitted to the vocal device. Accordingly, the vocal device generates a voice signal of the telephone number. That is, the telephone is capable of speaking a telephone number of a calling party.

To achieve the above objects, this invention applies a speech IC and a DTMF decoder to a CID telephone. The CID receiver is used to receive signals inputted through the telephone line and determine the telephone number of the calling party accordingly. The DTMF decoder is used to analyze the DTMF signals, which represent a number inputted by a remote user over the telephone line. The speech IC can be used to speak out the telephone number of the calling party when ringing, or in the case of remote access, to speak out over the telephone line all the incoming telephone numbers recorded in the telephone set memory.

The following occurs when a telephone set of the present invention receives an incoming call. First, upon receiving the telephone number of the calling party outputted from the CID receiver, the telephone set uses a controller such as a microprocessor or a logic controller to provide a control signal to drive the speech IC to speak out the telephone number of the calling party. The speech signal generated by the speech IC is amplified and outputted by speakers. Second, the telephone set uses the controller to store the telephone number of the calling party into a memory. Third, if DTMF signals are received, the controller determines whether the number represented by the DTMF signals is equal to the password preset by the user. If the number represented by the DTMF signals is the same as the preset password, the speech IC generates the speech signal and outputs all the telephone numbers recorded in the memory of the telephone set to the telephone line through the hybrid circuit.

Because the telephone set of the present invention speaks out the telephone number of the calling party while the telephone is ringing, a user can determine whether or not to answer the telephone. Moreover, by inputting the preset password, a user can remotely obtain all the telephone numbers recorded in the memory of the telephone set memory. Thus, the user will know who has called even if the user missed the call and the calling party did not leave any message.

### BRIEF DESCRIPTION OF THE DRAWINGS

The following detailed description, given by way of example and not intended to limit the invention solely to the embodiments described herein, will best be understood in conjunction with the accompanying drawings in which:
Fig. 1 is a timing diagram illustrating the signals while there is a call for a CID telephone that is on-hook;
Fig. 2 is a block diagram of the telephone set according to one embodiment of this invention; and
Fig. 3 is a diagram illustrating the operation process of the telephone set according to this invention.

### DETAILED DESCRIPTION OF THE PREFERRED EMBODIMENTS

Referring to Fig. 2, a telephone set capable of speaking the telephone number of a calling party comprises: a hybrid circuit 10; a caller ID receiver 12; a DTMF receiver 14; a controller 16; a speech IC 18; a voice output device 20; a selector 22; a memory 24; a display device 26; and a keypad 28.

The hybrid circuit 10 serves as an interface between the ring/tip line and the internal circuit of the telephone set.

The caller ID receiver 12 receives signals from the telephone line through the hybrid circuit 10 and determines the telephone number of the calling party according to the signals being received.

The DTMF (Double Tone Multiple Frequency) receiver 14 is used to receive DTMF signals and determine which keys the input DTMF signals represent. Once the keys are determined, a code consisting of symbols and digits represented by the keys is outputted by the DTMF receiver 14.

The controller 16, which can be a microprocessor or a logic control circuit, is used to receive data outputted from the caller ID receiver 12 and the DTMF receiver 14.

The speech IC 18 generates voice signals under the control of the controller 16. Then the voice signals are amplified and outputted by the voice output device 20.

The selector 22 is used to alternatively output the voice signals through the hybrid circuit 10 or the voice output device 20 under the control of the controller 16.

The memory 24 is used to store the telephone number of the calling party under the control of the controller 16.

The display device 26 can display the telephone number of the calling party while there is an incoming call. The keypad 28 can be used to preset a password. The preset password can be used to identify the user. Thus the user can retrieve the telephone numbers stored in the memory through the telephone line even he is at a remote place far away from the telephone set.

The telephone set of this invention provides the function of speaking the telephone number of the calling party under the control of the controller 16.

The controller 16 first receives the telephone number of the calling party outputted from the caller ID receiver 12 while a call arrives, then stores the telephone number in the memory 24 and controls the display device 26 to display the telephone number. The controller 16 also controls the speech IC 18 to generate a voice signal according to the telephone number. Then the voice signal is outputted by the voice output device 20 through the selector 22 under the control of the controller 16. The voice output device 20 may comprise an amplifier 20A and a speaker 20B.

Moreover, when a code is inputted by a user who wants to retrieve the telephone numbers stored in the memory through the telephone line, the code is received by the DTMF receiver 14. The code is analyzed and then compared with the preset password. If the code is the same as the preset password, the controller 16 accordingly retrieves the telephone numbers stored in the memory 24. Then the controller 16 controls the speech IC 18 to generate a voice signal according to the telephone number. The voice signal is outputted by the telephone line through the selector 22 under the control of the controller 16.

The selector 22 can be a de-multiplexor such as the CD4053 produced by National Semiconductor Corporation, which can output an input signal through different output terminals under the control of the controller 16. The speech IC 18 can be the W52802 series produced by Winbond Electronic Co. The caller ID receiver 12 can be the W91030 series produced by Winbond Electronic Co.

Furthermore, if the caller ID receiver 12 can directly output the telephone number of the calling party, such as the W91040 series produced by Winbond Electric Co, then the controller can consist of a register and a logic control circuit (not shown) instead of a microprocessor. That is, the logic control circuit can be used to control the speech IC 18 to speak the telephone number of the calling party after the telephone number is outputted to the register from the caller ID receiver 12.

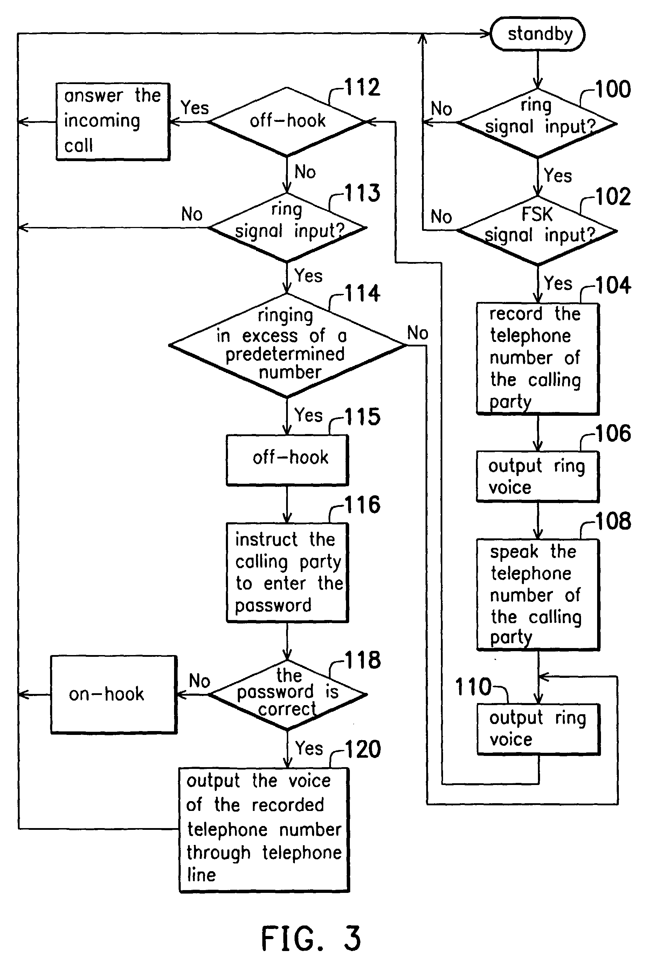

Referring to Fig. 3, the operation process of the telephone set of this invention includes the steps of: (i) step 100, in which the telephone set is on standby and detects whether there is a ring signal; if a ring signal is detected then go to step 102 to detect whether there is an FSK signal input; if an FSK signal is detected then go to the next step, otherwise go back to step 100; (ii) step 104, recording the telephone number of the calling party; (iii) step 106, outputting a ringing signal; (iv) step 108, playing the voice of the telephone number; (v) step 110, outputting the ringing signal again; (vi) step 112, determining whether the telephone is off-hook; if the telephone is off-hook then the calling party can speak, otherwise determining whether there is still a ring signal; if there is a ring signal then go to the next step, otherwise go back to step 100; (vii) step 114, determining whether the number of the incoming ring signals is larger than a predetermined number; if the number of the incoming ring signals is not larger than the predetermined number then go to step 110, otherwise go to step 115 to automatically answer the incoming call and then go to the next step; (viii) step 116, instructing the calling party to enter the password through the telephone line; (ix) step 118, determining whether the input password is correct; if the input password is not correct then go back to step 100, otherwise go to the next step; (x) step 120, playing all of the recorded telephone numbers by means of the speech IC through the telephone line.

In the process described above, the telephone set of this invention speaks and records the telephone number of the calling party after the first ring. If the telephone set continues ringing in excess of a predetermined number, then the telephone set will automatically answer the incoming call and enter a remote control mode. In other words, if the password entered by the calling party is correct, then the calling party can remotely control the operation of the telephone set, for example, to retrieve the telephone numbers recorded in the telephone set.

While the present invention has been particularly shown and described with reference to a preferred embodiment, it will be readily appreciated by those of ordinary skill in the art that various changes and modifications may be made without departing from the invention. For example, the operation process of Fig. 3 is applied according to the Bellcore standard. For various standards, the steps of detecting the ring signal and the caller ID have to be modified. It is intended that the claims be interpreted to cover the disclosed embodiment, those alternatives which have been discussed above and all equivalents thereto.

## Claims

1. A telephone set capable of speaking a telephone number of a calling party comprising:
a caller ID receiver for receiving signals from a telephone line and determining the telephone number of the calling party according to the signals being received;
a controller for receiving the telephone number output from the caller ID receiver and accordingly generating a control signal; and
a vocal device for generating a voice signal of the telephone number by receiving the control signal.

2. A telephone set as claimed in claim 1 wherein the vocal device comprises a speech IC for generating a voice signal and a speaker for outputting the voice signal.

3. A telephone set as claimed in claim 1 wherein the controller is a microprocessor.

4. A telephone set as claimed in claim 1 further comprising a register for storing the telephone number output from the caller ID receiver.

5. A telephone set as claimed in claim 1 further comprising a display device for displaying the telephone number of the calling party while the controller stores the telephone number into a memory.

6. A telephone set as claimed in claim 2 further comprising an amplifier, located between the speech IC and the speaker, for amplifying the voice signal.

7. A telephone set as claimed in claim 4 wherein the controller is a logic control circuit for generating a control signal according to the telephone number stored in the register.

8. A telephone set capable of speaking a telephone number of a calling party comprising:
a hybrid circuit serving as an interface between the telephone set and a telephone line;
a caller ID receiver for receiving signals from the telephone line and determining the telephone number of the calling party according to the signals being received;
a DTMF receiver for receiving DTMF signals, and determining a code represented by the DTMF signals;
a controller for receiving the telephone number output from the caller ID receiver, storing the telephone number into a memory, and determining whether the DTMF code is the same as a preset password; and
a speech device for generating a voice signal of the telephone numbers stored in the telephone set memory and outputting the voice signal to the telephone line through the hybrid circuit when the code is the same as the password.

9. A telephone set as claimed in claim 8 wherein the speech device is a speech IC.

10. A telephone set as claimed in claim 8 wherein the controller is a microprocessor.

11. A telephone set as claimed in claim 8 further comprising a register for storing the telephone number output from the caller ID receiver.

12. A telephone set as claimed in claim 8 further comprising a display device for displaying the telephone number of the calling party while there is an incoming call.

13. A telephone set as claimed in claim 8 further comprising a keypad for inputting the preset password.

14. A telephone set as claimed in claim 9, further comprising a speaker for outputting the voice signal.

15. A telephone set as claimed in claim 11, wherein the controller is a logic control circuit for generating a control signal according to the telephone number stored in the register.

16. A telephone set as claimed in claim 14, further comprising an amplifier, located between the speech IC and the speaker, for amplifying the voice signal.

17. A telephone instrument for receiving calls from a calling party, comprising:
a caller ID receiver for receiving signals from a telephone line, determining the telephone number of the calling party from the received signals, and outputting a signal corresponding to the calling party's telephone number;
a controller for receiving the signal from the caller ID receiver and generating a control signal in dependence thereon; and
a speech device for generating a vocal output signal identifying the calling party on the basis of the control signal.

18. A telephone instrument according to claim 17, further comprising memory means for storing the telephone number of the calling party.

19. A telephone instrument according to claim 18, further including means for outputting the memory contents via the telephone line on receipt of a predetermined command code.
